# FASCICULE DE BREVET EUROPEEN

(11) **EP 2 459 628 B1**
(45) Date de publication et mention de la délivrance du brevet: **22.01.2014**
(21) Numéro de dépôt: 10752074.4
(22) Date de dépôt: 22.07.2010
(51) Int. Cl.: C08J 9/20, C08F 2/18, C08F 4/38, C08J 9/14

(54) **PROCEDE DE PREPARATION DE POLYSTYRENE EXPANSIBLE PAR INJECTION EN CONTINU D'UN PEROXYDE ORGANIQUE LIQUIDE**
VERFAHREN ZUR HERSTELLUNG VON EXPANDIERPAREM POLYSTYROL MITTELS KONTINUIERLICHER EINSPRITZUNG VON ORGANISCHEM FLÜSSIGPEROXID
METHOD FOR PREPARING EXPANDABLE POLYSTYRENE BY CONTINUOUSLY INJECTING LIQUID ORGANIC PEROXIDE

(30) Priorité: 27.07.2009 FR 0955241; 27.07.2009 US 228740 P
(43) Date de publication de la demande: 06.06.2012
(73) Titulaire: Arkema France, 92700 Colombes (FR)
(72) Inventeur: NICOL, Pascal, F-69230 Saint Genis Laval (FR); COCHET, Jacques, F-38150 Chanas (FR)
(86) Numéro de dépôt international: PCT/FR2010/051548
(87) Numéro de publication internationale: WO 2011/012798

(56) Documents cités:
- EP-A1- 2 105 457
- US-A1- 2004 249 003
- US-A1- 2005 256 216
- US-B1- 6 608 150
- JUNPO HE, JINGMIN CHEN, LILI, JINGYUN PAN, CHENGMING LI: "Rate enhancement of nitroxide-mediated living free-radical polymerization by continuous addition of initiator." POLYMER, vol. 41, 2000, pages 4573-4577, XP002575822

## Description

La présente invention concerne un procédé de préparation de polystyrène expansible ainsi qu'un polystyrène expansible pouvant être obtenu par un tel procédé.

L'une des méthodes connues de production de polymères de type polystyrène expansible, appelé PSE dans la suite, est la polymérisation en suspension aqueuse. Il s'agit généralement d'un procédé de type batch dans lequel deux initiateurs de polymérisation solubles dans le monomère ou plus sont employés, avec un profil de température augmentant par paliers, en continu, ou par combinaison des deux. Les initiateurs du procédé sont choisis en fonction de leur température de demi-vie, pour alimenter la polymérisation en radicaux de façon contrôlée en des points choisis du profil de température, de sorte qu'une conversion efficace soit obtenue en une durée acceptable. Dans la polymérisation du styrène, il est plus pratique de décrire les performances de décomposition de l'initiateur en terme de température de demi-vie d'une heure, définie comme étant la température suffisante pour entraîner la décomposition de la moitié de la concentration initiale en initiateur en une heure.

Traditionnellement, la polymérisation en suspension destinée à préparer le PSE est mise en oeuvre dans un procédé utilisant deux paliers de température différents et deux initiateurs, un initiateur de premier palier et un initiateur de second palier ou de « finition » ; ces deux initiateurs ont des températures de demi-vie différentes, chacune adaptée au palier de température correspondant. Dans un tel procédé, le peroxyde de dibenzoyle (BPO) est souvent employé en tant qu'initiateur de premier palier à une température de réaction comprise entre environ 82 °C et 95 °C. Les autres initiateurs de premier palier pouvant être employés dans cet intervalle de température peuvent inclure le peroxy-2-éthylhexanoate de tert-butyle, le peroxy-2-éthylhexanoate de tert-amyle et le 2,5-diméthyl-2,5-di(2-éthylhexanoylperoxy)hexane. Des initiateurs comme le peroxybenzoate de tert-butyle (TBP) ou le peroxyde de dicumyle (DCP) sont largement employés pour le palier haut de température, ou second palier, à une température comprise entre 115 °C et 135 °C. Le second palier est généralement une étape de finition servant à minimiser la quantité de monomère résiduel dans le PSE. Dans les procédés à finalité commerciale, cette étape est souvent mise en oeuvre à une température supérieure à 125 °C pendant une durée prolongée pour réduire la quantité de monomère jusqu'à des teneurs acceptables.

Les défauts caractéristiques du procédé classique sont la durée de réaction importante nécessaire à l'obtention d'une conversion adéquate au premier palier, et les températures de finition relativement importantes nécessaires dans la seconde étape.

Pour résoudre ce problème, le document US 6,608,150 propose un procédé amélioré de préparation de polystyrène expansible impliquant des peroxydes de température « intermédiaire », c'est-à-dire des initiateurs de type peroxyde dont la température de demi-vie d'une heure est comprise entre 101 °C et 111 °C. Selon ce document, l'emploi de tels peroxydes « intermédiaires » dans la préparation de polystyrène expansible permet de réduire la durée de conversion à quelques heures.

Le polystyrène expansible est obtenu par le procédé en suspension sous forme de billes essentiellement sphériques. US 6,608,150 précise qu'un agent d'expansion, par exemple le pentane, peut être employé dans le procédé pour rendre expansibles les billes de polystyrène.

Cependant, il est connu que l'emploi de pentane dans un procédé de préparation de polystyrène expansible entraîne une diminution de la masse moléculaire du fait d'un mécanisme de transfert sur l'agent alcane (voir Principles of Polymerization-George Odian p 203-217, McGraw-Hill Book Company 1970).

En outre, l'industrie exige de plus en plus que les résines polystyrènes incluent des adjuvants ignifugeants pour des raisons de sécurité. Par exemple, les résines ignifugées sont largement employées dans les applications de type isolation. L'ajout de tels additifs peut également entraîner une diminution de la masse moléculaire du polystyrène résultant.

Il apparaît donc que plusieurs facteurs du procédé de préparation du polystyrène expansible peuvent entraîner une diminution significative de la masse moléculaire d'un tel polystyrène.

Le terme « masse moléculaire » selon la présente invention désigne la masse moléculaire moyenne en poids (Mw). Selon la présente invention, la masse moléculaire est mesurée par la méthode de chromatographie d'exclusion stérique (SEC) avec des étalons de polystyrène.

Il est important que le polystyrène expansible présente une masse moléculaire élevée pour garantir les propriétés mécaniques des matériaux finaux.

Il a été découvert par l'inventeur que l'utilisation d'un initiateur de type peroxyde spécifique permettait d'accélérer la préparation du polystyrène expansible tout en autorisant l'utilisation d'un agent d'expansion, et en obtenant néanmoins un polystyrène de masse moléculaire particulièrement élevée.

Il a également été découvert par l'inventeur que l'addition continue dudit initiateur de type peroxyde spécifique pendant la réaction de polymérisation pouvait également accélérer la préparation du polystyrène expansible.

Dans un premier aspect, la présente invention concerne un procédé de préparation de polystyrène expansible qui comprend les étapes suivantes :
- I°)a) préparation d'une suspension aqueuse comprenant le monomère styrène,
- I°)b) chauffage de la suspension à une température de polymérisation comprise entre 100 °C et 120 °C,
- I°)c) addition en continu, avant, pendant et/ou après l'étape I°)b) d'au moins un initiateur de type peroxyde organique de formule (I) 1-alkoxy-1-t-alkylperoxycyclohexane dans lequel le groupement alkoxy comprend entre 1 et 4 atomes de carbone, le groupement t-alkyle comprend entre 4 et 12 atomes de carbone, et le cycle cyclohexane peut éventuellement être substitué par 1 à 3 groupements alkyle, chacun comportant indépendamment entre 1 et 3 atomes de carbone,
- ii°) ajout d'un agent d'expansion choisi au sein du groupe constitué d'alcanes comportant entre 4 et 6 atomes de carbone et de leurs mélanges.

Le procédé selon l'invention permet d'obtenir un polystyrène expansible de masse moléculaire élevée. De façon préférentielle, le polystyrène expansible pouvant être obtenu par le procédé selon l'invention présente une masse moléculaire (Mw) d'au moins 170 000 g/mol, préférentiellement d'au moins 175 000 g/mol, et plus préférentiellement d'au moins 190 000 g/mol.

Du fait de sa masse moléculaire élevée, le polystyrène expansible selon l'invention peut être efficacement employé dans des applications de type isolation ou emballage.

En outre, le procédé selon l'invention présente une durée de conversion réduite par rapport à ceux de l'art antérieur.

Le procédé selon l'invention implique au moins un initiateur de type peroxyde organique de formule (I), c'est-à-dire un 1-alkoxy-1-t-alkylperoxycyclohexane dans lequel le groupement alkoxy comprend entre 1 et 4 atomes de carbone, le groupement t-alkyle comprend entre 4 et 12 atomes de carbone, et le cycle cyclohexane peut éventuellement être substitué par 1 à 3 groupements alkyle, chacun comportant indépendamment entre 1 et 3 atomes de carbone.

Selon la présente invention, il a été découvert que l'emploi d'un tel peroxyde organique spécifique de formule (I) en combinaison avec un agent d'expansion tel qu'un alcane comportant entre 4 et 6 atomes de carbone et les mélanges de tels alcanes permettait d'obtenir un polystyrène expansible de masse moléculaire élevée, en une courte durée. Un tel résultat ne peut pas être obtenu avec d'autres peroxydes organiques, de température de demi-vie d'une heure similaire à celle des composés de formule (I) mais de formule chimique différente de la formule (I).

Au titre de peroxydes organiques de formule (I), on peut citer les 1-alkoxy-1-t-amylperoxycyclohexanes et les 1-alkoxy-1-t-hexylperoxycyclohexanes, le groupement alkoxy comportant entre 1 et 4 atomes de carbone, et le cycle cyclohexane pouvant éventuellement être substitué par 1 à 3 groupements alkyle, chacun comportant indépendamment entre 1 et 3 atomes de carbone.

Dans un mode d'application de l'invention, le ou les initiateurs de type peroxyde organique sont le 1-méthoxy-1-t-amylperoxycyclohexane (également appelé TAPMC dans la suite).

Dans un mode d'application préféré du procédé selon l'invention, le mélange de polymérisation est formulé à une température inférieure à la température de réaction (polymérisation) avant d'être chauffé pour atteindre ladite température de réaction recherchée. Dans un tel procédé, de façon préférentielle, au maximum 40 % en masse (% w/w), plus préférentiellement au maximum 30 à 20 % en masse, et le plus préférentiellement au maximum 5 % en masse du peroxyde organique, par rapport à la masse totale de peroxyde employée pendant la polymérisation, sont présents avant l'étape I°)b), au début de la phase de chauffage, tandis que le reste est ajouté en continu sur une durée d'au moins 1, préférentiellement 2, et plus préférentiellement entre 2 et 4 heures pendant ou après l'étape I°)b), en fonction de la durée de polymérisation. Plus préférentiellement, le reste du peroxyde est ajouté à partir du moment où la température du mélange réactionnel est régulée à la valeur de la température de réaction recherchée.

L'emploi d'une faible quantité de peroxyde au début permet un chauffage rapide et un début rapide de la polymérisation ; en effet, ce peroxyde va commencer à se décomposer en partie pendant le chauffage du mélange de polymérisation. Lorsque le mélange de polymérisation atteint la température de polymérisation, le reste du peroxyde peut être ajouté au mélange pour réguler la vitesse de polymérisation ultérieure. De façon préférentielle, l'addition se fait en continu ; ceci permet la régulation la plus exacte de la vitesse de polymérisation et un dégagement de chaleur de polymérisation constant, garantissant ainsi une efficacité et une qualité du polystyrène maximales. La durée d'addition de 2 à 4 heures permet une utilisation très efficace de l'initiateur. L'utilisation de telles durées d'addition permet d'atteindre des rendements élevés en polystyrène de haute qualité.

Dans un autre mode d'application préféré, le mélange réactionnel est formulé à la température de polymérisation ou à proximité de celle-ci. Dans ce procédé, appelé par la suite procédé de démarrage à chaud, il n'est pas nécessaire d'ajouter une certaine quantité de peroxyde au début tandis que le reste est ajouté au cours du temps. Cependant, toujours dans ce procédé de démarrage à chaud, il peut être avantageux d'ajouter jusqu'à 40 % en masse de la totalité du peroxyde immédiatement après la formation du mélange réactionnel, le reste étant ajouté au cours du temps. Toujours dans ce procédé de démarrage à chaud, de façon préférentielle, au moins 10 % en masse de la totalité du peroxyde sont présents à partir du moment où le mélange réactionnel atteint la température de réaction (polymérisation) recherchée. Si cette procédure est employée, le peroxyde selon l'invention est préférentiellement ajouté au titre de composant final. Cette procédure est particulièrement préférée lorsqu'une certaine quantité d'inhibiteur de polymérisation (une espèce de type piège à radicaux) est présente dans le mélange réactionnel. Lorsqu'un tel piège à radicaux est présent, par exemple lorsqu'il est introduit avec le monomère dans lequel il est typiquement employé en tant que stabilisant, le peroxyde initialement introduit réagit avec ledit piège à radicaux, empêchant ainsi tout retard dans le démarrage de la réaction de polymérisation.

L'initiateur de type peroxyde organique de formule (I) est employé dans une première étape i°) du procédé selon l'invention, durant laquelle ledit initiateur de type peroxyde organique est chauffé à une température de polymérisation comprise entre 100 °C et 120 °C. Dans l'un des modes d'application de l'invention, cette température est comprise entre 105 °C et 115 °C, et est préférentiellement égale à 110 °C. Une telle température est proche de la température de demi-vie d'une heure du peroxyde organique de formule (I), mesurée selon la technique bien connue de mesure de la vitesse de décomposition de l'initiateur dans le cumène, un solvant aromatique. En effet, dans un mode d'application préféré de l'invention, les peroxydes organiques de formule (I) sont employés en tant qu'initiateurs de premier palier.

Au cours de l'étape I°)a), la suspension aqueuse est chauffée à une température de polymérisation comprise entre 100°C et 120 °C, préférentiellement entre 105 °C et 115 °C, et plus préférentiellement égale à 110 °C pendant une durée suffisante pour obtenir une décomposition au moins partielle dudit initiateur et initier la polymérisation du monomère styrène. Cette durée peut varier entre environ 1,5 heure et environ 3 heures.

Il doit être entendu que l'expression « addition en continu » est employée pour décrire l'étape d'ajout de peroxyde dans le mélange réactionnel de polymérisation dans les conditions de polymérisation.

L'addition peut être effectuée par intermittence pendant la polymérisation sur une durée au cours de laquelle, préférentiellement, au moins 20 %, préférentiellement au moins 40 %, plus préférentiellement au moins 60 % de tout le monomère employé dans le procédé sont polymérisés, ce qui signifie qu'au moins deux portions d'initiateurs sont ajoutées au mélange réactionnel, ou l'addition peut être continue, ce qui signifie que pendant une durée déterminée, l'initiateur est ajouté en continu au mélange réactionnel, ou toute combinaison de ces techniques. Les exemples d'une combinaison de telles techniques incluent par exemple un procédé où l'initiateur est tout d'abord ajouté en continu, puis où l'addition est arrêtée, puis où l'initiateur est de nouveau ajouté en continu. Si on décide de procéder par intermittence, l'initiateur est ajouté à au moins 2, préférentiellement au moins 4, ou plus préférentiellement au moins 10, et le plus préférentiellement au moins 20 moments à la température de polymérisation.

Le plus préférentiellement, le peroxyde est ajouté en continu et/ou par intermittence à partir du début de la réaction de polymérisation, préférentiellement après la polymérisation d'au moins 5 %, plus préférentiellement d'au moins 10 %, encore plus préférentiellement d'au moins 20 %, le plus préférentiellement d'au moins 30 % du ou des monomères. Pendant la période d'addition, au moins 2, préférentiellement au moins 5, plus préférentiellement au moins 10 %, plus préférentiellement au moins 20 %, plus préférentiellement au moins 30 %, et le plus préférentiellement au moins 50 % de tout le monomère employé dans le procédé sont polymérisés. L'addition peut être mise en oeuvre au niveau de n'importe quel point d'entrée adapté du réacteur.

Dans un mode d'application de l'invention, la suspension aqueuse de l'étape i°) comprend en outre au moins un initiateur de type peroxyde organique supplémentaire, différent dudit initiateur de type peroxyde organique de formule (I).

De façon préférentielle, ledit initiateur de type peroxyde organique supplémentaire joue le rôle d'initiateur de second palier. Lorsque la suspension aqueuse de l'étape i°) comprend un initiateur de type peroxyde organique de formule (I) au titre d'initiateur de premier palier et au moins un initiateur de type peroxyde organique supplémentaire différent au titre de l'initiateur de second palier, l'étape i°) comprend un palier I°)b'), au cours duquel ladite suspension est chauffée à une température comprise entre 100 °C et 120 °C, préférentiellement entre 105 °C et 115 °C, et plus préférentiellement égale à 110 °C, et un second palier I°)c') au cours duquel ladite suspension est chauffée à une température correspondant à la température de demi-vie d'une heure du ou des peroxydes organiques supplémentaires.

Ledit initiateur de type peroxyde supplémentaire peut être choisi parmi tous les initiateurs de type peroxyde organique ne répondant pas à la formule (I) et dont la température de demi-vie d'une heure, mesurée selon la technique bien connue de mesure de la vitesse de décomposition de l'initiateur dans le cumène, un solvant aromatique, est supérieure à 110 °C. Dans l'un des modes d'application de l'invention, l'initiateur de type peroxyde supplémentaire est choisi au sein du groupe constitué par les composés de formule (II), c'est-à-dire les monoperoxycarbonates de OO-t-alkyl-O-alkyle, où le groupement t-alkyle comprend entre 4 et 12 atomes de carbone, préférentiellement entre 4 et 5 atomes de carbone, et le groupement alkyle comprend entre 3 et 12 atomes de carbone, et préférentiellement 8 atomes de carbone, et leurs mélanges.

Dans l'un des modes d'application du procédé selon l'invention, le ou les initiateurs de type peroxyde supplémentaires sont le monoperoxycarbonate de OO-t-amyl-O-2-éthylhexyle, également appelé TAEC dans la suite.

Dans un autre mode d'application du procédé selon l'invention, le ou les initiateurs de type peroxyde supplémentaires sont le monoperoxycarbonate de OO-t-butyl-O-2-éthylhexyle, également appelé TBEC dans la suite.

Ces produits sont commercialisés par la société ARKEMA sous les marques respectives « Luperox® TAEC » et « Luperox® TBEC ».

Dans l'un des modes d'application du procédé selon l'invention, en particulier lorsque le monoperoxycarbonate de OO-t-amyl-O-2-éthylhexyle ou le monoperoxycarbonate de OO-t-butyl-O-2-éthylhexyle est employé au titre d'initiateur de second palier, la suspension aqueuse est chauffée pendant ledit second palier I°)b'), à une température comprise entre 120 °C et 140 °C, préférentiellement à une température environ égale à 130 °C. Ledit second palier peut durer entre 1 et 3 heures.

Dans l'un des modes d'application du procédé selon l'invention, l'initiateur de second palier est ajouté en continu, comme l'initiateur de premier palier.

Dans l'un des modes d'application du procédé selon l'invention, ledit premier palier dure entre environ 2 et 3 heures, et ledit second palier dure environ 2 heures.

Dans un autre mode d'application du procédé selon l'invention, le peroxyde organique de formule (I) joue le rôle d'initiateur de second palier et ledit initiateur de type peroxyde supplémentaire joue le rôle d'initiateur de premier palier.

Dans l'un des modes d'application de l'invention, ledit initiateur de type peroxyde organique de formule (I) est employé dans la suspension aqueuse de l'étape i°) à des teneurs comprises entre 4 et 25 milli-équivalents d'initiateur par litre de styrène, plus préférentiellement entre 12 et 20 milli-équivalents d'initiateur par litre de styrène.

Le styrène est le monomère préféré du procédé selon l'invention. Cependant, jusqu'à 15 % de la masse de styrène peuvent être remplacés par d'autres monomères copolymérisables portant des insaturations éthyléniques, par exemple des alkylstyrènes, de l'alpha-méthylstyrène, des esters d'acide acrylique et de l'acrylonitrile. Par exemple, le monomère styrène à polymériser peut également contenir jusqu'à 15 % en masse, par rapport à la masse totale de styrène, de monomères copolymérisables différents des monomères styrènes.

Dans l'un des modes d'application de l'invention, ledit initiateur de type peroxyde organique supplémentaire est employé dans la suspension aqueuse de l'étape i°) à des teneurs comprises entre 1 et 20 milli-équivalents d'initiateur par litre de styrène, plus préférentiellement entre 2 et 10 milli-équivalents d'initiateur par litre de styrène.

Le procédé selon l'invention comprend également une étape, l'étape ii°), d'addition d'un agent d'expansion choisi au sein du groupe constitué par les alcanes comportant entre 4 et 6 atomes de carbone et leurs mélanges.

L'agent d'expansion peut être ajouté à la suspension aqueuse à n'importe quel moment de l'étape i°), ou après la fin de l'étape i°).

Dans l'un des modes d'application de l'invention, l'agent d'expansion est ajouté pendant l'étape i°), c'est-à-dire pendant la polymérisation du monomère styrène. Dans un tel cas, lorsque l'étape i°) comprend un premier palier et un second palier, l'agent d'expansion peut être ajouté pendant le premier palier de l'étape i°). Par exemple, l'agent d'expansion peut être ajouté à la fin du premier palier de l'étape i°).

Dans un autre mode d'application de l'invention, les billes sphériques de polystyrène obtenues à la fin de l'étape i°) sont triées par taille, puis l'agent d'expansion est ajouté aux billes sphériques triées. Ce mode d'application du procédé permet un contrôle plus précis de la taille des billes.

Dans l'un des modes d'application de l'invention, ledit agent d'expansion est choisi au sein du groupe constitué par le butane, le 2-méthylbutane, le pentane, le cyclohexane et leurs mélanges. De tels agents d'expansion sont des produits bien connus et commerciaux.

De façon préférentielle, ledit agent d'expansion est le pentane.

Dans l'un des modes d'application de l'invention, l'agent d'expansion est ajouté à des teneurs comprises entre 5 et 10 % en masse par rapport à la masse du styrène.

Dans l'un des modes d'application de l'invention, un adjuvant choisi au sein du groupe comprenant les agents ignifugeants, les stabilisateurs de suspension inorganiques, comme le phosphate de calcium ou le pyrophosphate de magnésium, les stabilisateurs de suspension organiques, comme la polyvinylpyrrolidone, l'alcool polyvinylique ou l'hydroxyéthylcellulose, les tensioactifs, les agents de transfert de chaîne, les agents de nucléation, les auxiliaires d'expansion, les lubrifiants, les plastifiants et leurs mélanges, est ajouté à la suspension aqueuse à l'étape i°) ou à l'étape ii°).

L'agent ignifugeant peut être sélectionné au sein du groupe comprenant les composés suivants : hexabromocyclododécane (HBCD), tétrabromobisphénol A (TBBPA), décabromodiphényléther (Deca-BDE), pentabromodiphényléther (Penta-BDE), octabromodiphényléther (Octa-BDE), tris-(dibromopropyl)phosphate, tétrabromure de carbone, bêta-dibromopropionate, tétrabromoéthylène, 1-2-dibromo-1,1,2,2-tétrachloroéthane, 1,1,2,2-tétrabromoéthane, dibromodichloroéthane, 1,2-dibromo-1,1-dichloroéthane, 1,2-dibromo-1,2,2-trichloroéthane, 1,2,3,4-tétrabromobutane, 1,2,3-tribromopropane, pentabromoéthane, tribromotrichlorocyclohexane, 1,2,4-tribromobutane, tétrabromopentane, hexabromoéthane, tétrabromodichlorocyclohexane, pentabromomonochlorocyclohexane, 1,2-di-(dibromométhyl)benzène, alpha,bêta-dibromoéthylbenzène, alpha,bêta-dibromopropionate et leurs mélanges.

De façon préférentielle, l'agent ignifugeant est l'hexabromocyclododécane.

Le ou les peroxydes employés dans le procédé selon l'invention sont ajoutés à la suspension aqueuse à l'étape i°) sous forme pure ou, préférentiellement, sous forme d'une dispersion (par exemple une suspension ou une émulsion dans le styrène) ou d'une solution diluée. Un ou plusieurs solvants adaptés peuvent être employés pour diluer l'initiateur. La nature des solvants fait qu'il est acceptable de les laisser en tant que résidus dans le polymère final, comme pour les solvants qui sont des plastifiants recherchés dans la résine finale.

Le polystyrène expansible pouvant être obtenu par le procédé décrit ci-avant présente une masse moléculaire élevée et peut donc être employé dans des applications de type isolation ou emballage. Par exemple, ce polystyrène expansible obtenu par le procédé ci-avant peut être employé dans la fabrication de pièces d'isolation, par exemple dans l'industrie des transports. Ce polystyrène expansible obtenu par le procédé ci-avant peut également être employé dans la fabrication d'emballages présentant de bonnes propriétés mécaniques.

La présente invention va à présent être illustrée plus avant par les exemples suivants.

### EXEMPLES :

Dans tous les exemples ci-après, la masse moléculaire du produit obtenu est mesurée selon la méthode donnée ci-avant dans la description de la présente demande.

### EXEMPLE 1 : Synthèse du 1-méthoxy-1-t-amylperoxycyclohexane (TAPMC)

Un mélange d'hydroperoxyde de t-amyle (TAHP), de cyclohexanone et de méthanol est traité par de l'acide sulfurique à 70 % à une température comprise entre -6 °C et -4 °C. En quinze minutes, un mélange à l'équilibre de 1-méthoxy-1-t-amylperoxycyclohexane, de 1,1-di-(t-amylperoxy)-cyclohexane et des produits de départ n'ayant pas réagi, cyclohexanone et TAHP, se forme. Une petite quantité (environ 2 %) de cyclohexane-1,1-diméthyoxycétal (CDMK) est également obtenue dans le mélange réactionnel. Le mélange réactionnel est traité par de l'eau froide, puis la phase aqueuse est séparée de la phase organique, qui est purifiée par rinçage.

### EXEMPLE 2 : (comparatif) BPO/TAEC

Dans un réacteur résistant à la pression de 2 litres de type Büchi, muni d'une double enveloppe et d'une agitation spécifique (agitateur à 3 pales sur deux niveaux) sont ajoutés à 20 °C et sous agitation 680 g d'eau déionisée avec 0,64 g d'alcool polyvinylique (Alcotex® 72.5 commercialisé par la société HARCO). Sont ensuite ajoutés 320 g de monomère styrène avec 1,44 g de peroxyde de dibenzoyle (Luperox® A75 commercialisé par la société ARKEMA) et 0,42 g de monoperoxycarbonate de OO-t-amyl-O-2-éthylhexyle (TAEC commercialisé sous la marque Luperox® TAEC par la société ARKEMA). Cette suspension aqueuse est chauffée à 90 °C pendant 1 heure puis maintenue à cette température pendant 4 heures pour le premier palier de polymérisation. Dans cet exemple, le peroxyde de dibenzoyle est employé au titre d'initiateur de premier palier.

Après 5 heures, 21,1 g de pentane sont ajoutés en deux minutes avec une pompe haute pression. Le milieu réactionnel est ensuite chauffé à 130 °C pendant 0,5 heure, puis maintenu à cette température pendant 2 heures. Dans cet exemple, le monoperoxycarbonate de OO-t-amyl-O-2-éthylhexyle est employé au titre d'initiateur de second palier.

Le milieu réactionnel est ensuite refroidi pendant 1 heure. Les billes de polystyrène obtenues sont récupérées par filtration, puis séchées.

Le produit obtenu présente une masse moléculaire (Mw) de 158 000 g/mol et contient 970 ppm de monomère styrène résiduel.

Le temps de cycle total est de 8,5 heures.

### EXEMPLE 3 : (comparatif) TAPMC/TAEC

Dans un réacteur résistant à la pression de 2 litres de type Büchi, muni d'une double enveloppe et d'une agitation spécifique (agitateur à 3 pales) sont ajoutés à 20 °C et sous agitation 680 g d'eau déionisée avec 0,64 g d'alcool polyvinylique (Alcotex® 72.5 commercialisé par la société HARCO). Sont ensuite ajoutés 320 g de monomère styrène avec 1,02 g de 1-méthoxy-1-t-amylperoxycyclohexane (TAPMC) obtenu comme décrit dans l'Exemple 1 ci-dessus, et 0,42 g de monoperoxycarbonate de OO-t-amyl-O-2-éthylhexyle (TAEC commercialisé sous la marque Luperox® TAEC par la société ARKEMA). Cette suspension aqueuse est chauffée à 110 °C pendant 1 heure puis maintenue à cette température pendant 2,5 heures pour le premier palier de polymérisation. Dans cet exemple, le 1-méthoxy-1-t-amylperoxycyclohexane est employé au titre d'initiateur de premier palier.

Après 3,5 heures, 21,1 g de pentane sont ajoutés en deux minutes avec une pompe haute pression. Le milieu réactionnel est ensuite chauffé à 130 °C pendant 0,5 heure, puis maintenu à cette température pendant 2 heures. Dans cet exemple, le monoperoxycarbonate de OO-t-amyl-O-2-éthylhexyle est employé au titre d'initiateur de second palier.

Le milieu réactionnel est ensuite refroidi pendant 1 heure. Les billes de polystyrène obtenues sont récupérées par filtration, puis séchées.

Le produit obtenu présente une masse moléculaire (Mw) de 226 000 g/mol et contient 700 ppm de monomère styrène résiduel.

Le temps de cycle total est de 7 heures.

### EXEMPLE 4 : (comparatif) TAPMC/TBEC

Le même procédé que celui de l'Exemple 3 est reproduit avec les mêmes quantités et le même temps de cycle, mais le 0,42 g de TAEC est remplacé par 0,42 g de monoperoxycarbonate de OO-t-butyl-O-2-éthylhexyle (Luperox® TBEC commercialisé par la société ARKEMA).

Dans cet exemple, le 1-méthoxy-1-t-amylperoxycyclohexane est employé en tant qu'initiateur de premier palier, et le monoperoxycarbonate de OO-t-butyl-O-2-éthylhexyle en tant qu'initiateur de second palier.

Le produit obtenu présente une masse moléculaire (Mw) de 220 000 g/mol et contient 500 ppm de monomère styrène résiduel.

### EXEMPLE 5 : (comparatif) HBCD

Le même procédé que celui de l'Exemple 3 est reproduit avec les mêmes quantités et le même temps de cycle, mais 2,1 g d'hexabromocyclododécane sont ajoutés à la suspension aqueuse de monomère styrène.

Le produit obtenu présente une masse moléculaire (Mw) de 153 000 g/mol et contient 1600 ppm de monomère styrène résiduel.

### EXEMPLE 6 : (Invention) injection en continu de TAPMC/TAEC

Dans un réacteur résistant à la pression de 2 litres de type Büchi, muni d'une double enveloppe et d'une agitation spécifique (agitateur à 3 pales sur deux niveaux) sont ajoutés à 20 °C et sous agitation 680 g d'eau déionisée avec 0,64 g d'alcool polyvinylique (Alcotex® 72.5 commercialisé par la société HARCO). Sont ensuite ajoutés 320 g de monomère styrène avec 0,42 g de monoperoxycarbonate de OO-t-amyl-O-2-éthylhexyle (TAEC commercialisé sous la marque Luperox® TAEC par la société ARKEMA). Cette suspension aqueuse est chauffée à 110 °C tout en ajoutant en continu, à l'aide d'une pompe et à un débit constant, une solution constituée de 1,02 g de 1-méthoxy-1-t-amylperoxycyclohexane (TAPMC) et de 26,2 g de styrène. La durée de l'injection est de 2,5 heures pour la première étape de la polymérisation.

Après 2,5 heures, 21,1 g de pentane sont ajoutés en deux minutes avec une pompe haute pression. Le milieu réactionnel est ensuite chauffé à 130 °C pendant 0,5 heure, puis maintenu à cette température pendant 2 heures. Dans cet exemple, le monoperoxycarbonate de OO-t-amyl-O-2-éthylhexyle est employé au titre d'initiateur de second palier.

Le milieu réactionnel est ensuite refroidi pendant 1 heure. Les billes de polystyrène obtenues sont récupérées par filtration, puis séchées.

Le produit obtenu présente une masse moléculaire (Mw) de 206 000 g/mol et contient 764 ppm de monomère styrène résiduel.

Le temps de cycle total est de 6 heures.

### EXEMPLE 7 : (Invention) injection en continu de TAPMC/TAEC

Dans un réacteur résistant à la pression de 2 litres de type Büchi, muni d'une double enveloppe et d'une agitation spécifique (agitateur à 3 pales sur deux niveaux) sont ajoutés à 20 °C et sous agitation 680 g d'eau déionisée avec 0,64 g d'alcool polyvinylique (Alcotex® 72.5 commercialisé par la société HARCO). Sont ensuite ajoutés 320 g de monomère styrène avec 0,42 g de monoperoxycarbonate de OO-t-amyl-O-2-éthylhexyle (TAEC commercialisé sous la marque Luperox® TAEC par la société ARKEMA). Cette suspension aqueuse est chauffée à 115 °C tout en ajoutant en continu, à l'aide d'une pompe et à un débit constant, une solution constituée de 1,02 g de 1-méthoxy-1-t-amylperoxycyclohexane (TAPMC) et de 20,8 g de styrène. La durée de l'injection est de 2 heures pour la première étape de la polymérisation.

Après 2 heures, 21,1 g de pentane sont ajoutés en deux minutes avec une pompe haute pression. Le milieu réactionnel est ensuite chauffé à 130 °C pendant 0,5 heure, puis maintenu à cette température pendant 1 heure. Dans cet exemple, le monoperoxycarbonate de OO-t-amyl-O-2-éthylhexyle est employé au titre d'initiateur de second palier.

Le milieu réactionnel est ensuite refroidi pendant 1 heure. Les billes de polystyrène obtenues sont récupérées par filtration, puis séchées.

Le produit obtenu présente une masse moléculaire (Mw) de 195 000 g/mol et contient 940 ppm de monomère styrène résiduel.

Le temps de cycle total est de 4,5 heures.

### EXEMPLE 8: (Invention) injection en continu de TAPMC/TAEC/HBCD

Le même procédé que celui de l'Exemple 6 est reproduit avec les mêmes quantités et le même temps de cycle, mais 2,1 g d'hexabromocyclododécane sont ajoutés à la suspension aqueuse de monomère styrène.

Le produit obtenu présente une masse moléculaire (Mw) de 193 000 g/mol et contient 770 ppm de monomère styrène résiduel.

Le temps de cycle total est de 6 heures.

## Revendications

1. Procédé de préparation de polystyrène expansible comprenant les étapes suivantes:
- i°)a) préparation d'une suspension aqueuse comprenant le monomère styrène,
- i°)b) chauffage de la suspension a une température de polymérisation comprise entre 100°C et 120°C,
- i°)c) addition en continu, avant, pendant et/ou après l'étape i)b) d'au moins un initiateur de type peroxyde organique de formule (I) 1-alkoxy-1-talkylperoxycyclohexane dans lequel le groupement alkoxy comprend entre 1 et 4 atomes de carbone, le groupement t-alkyle comprend entre 4 et 12 atomes de carbone, et le cycle cyclohexane peut éventuellement être substitué par 1 à 3 groupements alkyle, chacun comportant indépendamment entre 1 et 3 atomes de carbone,
- ii°) ajout d'un agent d'expansion choisi au sein du groupe constitue d'alcanes comportant entre 4 et 6 atomes de carbone et de leurs mélanges.

2. Procédé conforme à la revendication 1, dans lequel le ou les initiateurs de type peroxyde organique sont le 1-methoxy-1-tamylperoxycyclohexane (TAPMC).

3. Procédé conforme à la revendication 1 ou 2, dans lequel ledit agent d'expansion est choisi au sein du groupe constitue par le butane, le 2-methylbutane, le pentane, le cyclohexane et leurs mélanges.

4. Procédé conforme à l'une quelconque des revendications 1 à 3, dans lequel, de façon préférentielle, au maximum 40 % en masse (% w/w), plus préférentiellement au maximum 30 à 20 % en masse, et le plus préférentiellement au maximum 5 % en masse du peroxyde organique, par rapport à la masse totale de peroxyde employée pendant la polymérisation, sont présents avant l'étape i°)b), tandis que le reste est ajoute en continu sur une durée d'au moins 1, préférentiellement 2, et plus préférentiellement entre 2 et 4 heures pendant ou après l'étape i°)b.

5. Procédé selon l'une quelconque des revendications 1 à 4, dans lequel la température de l'étape i°) est comprise entre 105°C et 115°C, et est préférentiellement égale à 110°C.

6. Procédé selon l'une quelconque des revendications 1 a 5, ou la suspension aqueuse de l'étape i°) comprend en outre au moins un initiateur de type peroxyde organique supplémentaire, différent dudit initiateur de type peroxyde organique de formule (I).

7. Procédé conforme à la revendication 6, dans lequel ledit initiateur de type peroxyde supplémentaire est choisi au sein du groupe constitue par les composes de formule (II), c'est-à-dire les monoperoxycarbonates de OO-t-alkyl-O-alkyle, ou le groupement t-alkyle comprend entre 4 et 12 atomes de carbone, préférentiellement entre 4 et 5 atomes de carbone, et le groupement alkyle comprend entre 3 et 12 atomes de carbone, et préférentiellement 8 atomes de carbone, et leurs mélanges.

8. Procédé conforme à l'une quelconque des revendications 1 à 7, dans lequel ledit initiateur de type peroxyde organique de formule (I) est employé dans la suspension aqueuse de l'étape i°) a des teneurs comprises entre 4 et 25 milli-équivalents d'initiateur par litre de styrène, plus préférentiellement entre 12 et 20 milli-équivalents d'initiateur par litre de styrène.

9. Procédé conforme à l'une quelconque des revendications 1 à 8, dans lequel le monomère styrène a polymériser contient également jusqu'a 15 % en masse, par rapport à la masse totale de styrène, de monomères copolymérisables différents des monomères styrènes.

10. Procédé conforme à l'une quelconque des revendications 1 à 9, ou de l'hexabromocyclododécane est ajoute à la suspension aqueuse de l'étape i°) ou de l'étape ii°).

11. Procédé conforme à l'une quelconque des revendications 6 à 10, ou la suspension aqueuse de l'étape i°) comprend un initiateur de type peroxyde organique de formule (I) au titre d'initiateur de premier palier et au moins un initiateur de type peroxyde organique supplémentaire différent au titre de l'initiateur de second palier, l'étape i°) comprend un palier i°)b'), au cours duquel ladite suspension est chauffée a une température comprise entre 100°C et 120°C, préférentiellement entre 105°C et 115°C, et plus préférentiellement égale à 110°C, et un second palier i°)c') au cours duquel ladite suspension est chauffée a une température correspondant à la température de demi-vie d'une heure du ou des peroxydes organiques supplémentaires.

## Patentansprüche

1. Verfahren zur Herstellung von expandierbarem Polystyrol, das die folgenden Schritte umfasst:
- i°)a) Herstellen einer wässrigen Suspension, die das Styrolmonomer umfasst,
- i°)b) Erhitzen der Suspension auf eine Polymerisationstemperatur im Bereich zwischen 100 °C und 120 °C,
- i°)c) kontinuierliches Zuführen, vor, während und/oder nach Schritt i°)b), mindestens eines Initiators vom Typ organisches Peroxid mit der Formel (I) 1-Alkoxy-1-t-alkylperoxycyclohexan, worin die Alkoxygruppe zwischen 1 und 4 Kohlenstoffatome umfasst, die t-Alkylgruppe zwischen 4 und 12 Kohlenstoffatome umfasst und der Cyclohexanring gegebenenfalls mit 1 bis 3 Alkylgruppen substituiert sein kann, die jeweils unabhängig zwischen 1 und 3 Kohlenstoffatome umfassen,
- ii°) Zugeben eines Blähmittels, ausgewählt aus der Gruppe bestehend aus Alkanen, die zwischen 4 und 6 Kohlenstoffatome umfassen, und deren Gemischen.

2. Verfahren nach Anspruch 1, wobei der oder die Initiatoren vom Typ organisches Peroxid 1-Methoxy-1-t-amylperoxycyclohexan (TAPMC) sind.

3. Verfahren nach Anspruch 1 oder 2, wobei das Blähmittel ausgewählt ist aus der Gruppe bestehend aus Butan, 2-Methylbutan, Pentan, Cyclohexan und deren Gemischen.

4. Verfahren nach einem der Ansprüche 1 bis 3, wobei bevorzugt maximal 40 Gew.-% (% w/w), stärker bevorzugt maximal 30 bis 20 Gew.-% und am stärksten bevorzugt maximal 5 Gew.-% des organischen Peroxids, bezogen auf das Gesamtgewicht des während der Polymerisation verwendeten Peroxids, vor Schritt i°)b) vorhanden sind, während der Rest kontinuierlich über eine Dauer von mindestens 1, bevorzugt 2 und am stärksten bevorzugt zwischen 2 und 4 Stunden während oder nach Schritt i')b zugeführt wird.

5. Verfahren nach einem der Ansprüche 1 bis 4, wobei die Temperatur von Schritt i°) im Bereich zwischen 105 °C und 115 °C liegt und bevorzugt gleich 110 °C beträgt.

6. Verfahren nach einem der Ansprüche 1 bis 5, worin die wässrige Suspension aus Schritt i°) ferner mindestens einen zusätzlichen Initiator vom Typ organisches Peroxid umfasst, der vom Initiator vom Typ organisches Peroxid mit der Formel (I) verschieden ist.

7. Verfahren nach Anspruch 6, wobei der zusätzliche Initiator vom Typ Peroxid ausgewählt ist aus der Gruppe bestehend aus den Verbindungen mit der Formel (II), das heißt den Monoperoxycarbonaten von OO-t-Alkyl-O-alkyl, worin die t-Alkylgruppe zwischen 4 und 12 Kohlenstoffatome, bevorzugt zwischen 4 und 5 Kohlenstoffatome, umfasst und die Alkylgruppe zwischen 3 und 12 Kohlenstoffatome und bevorzugt 8 Kohlenstoffatome umfasst, und deren Gemischen.

8. Verfahren nach einem der Ansprüche 1 bis 7, wobei der Initiator vom Typ organisches Peroxid mit der Formel (I) in der wässrigen Suspension aus Schritt i°) mit Anteilen im Bereich zwischen 4 und 25 Milliäquivalenten Initiator je Liter Styrol, stärker bevorzugt zwischen 12 und 20 Milliäquivalenten Initiator je Liter Styrol verwendet wird.

9. Verfahren nach einem der Ansprüche 1 bis 8, wobei das zu polymerisierende Styrolmonomer außerdem bis zu 15 Gew.-%, bezogen auf das Gesamtgewicht an Styrol, an copolymerisierbaren Monomeren enthält, die von den Styrolmonomeren verschieden sind.

10. Verfahren nach einem der Ansprüche 1 bis 9, worin der wässrigen Suspension aus Schritt i°) oder aus Schritt ii°) Hexabromcyclododecan zugegeben wird.

11. Verfahren nach einem der Ansprüche 6 bis 10, worin die wässrige Suspension aus Schritt i°) einen Initiator vom Typ organisches Peroxid mit der Formel (I) als Initiator der ersten Stufe und mindestens einen verschiedenen, zusätzlichen Initiator vom Typ organisches Peroxid als Initiator der zweiten Stufe umfasst, worin Schritt i°) eine Stufe i°)b') umfasst, in deren Verlauf die Suspension auf eine Temperatur im Bereich zwischen 100 °C und 120 °C, bevorzugt zwischen 105 °C und 115 °C und stärker bevorzugt auf gleich 110 °C erhitzt wird, und eine zweite Stufe i°)c') in deren Verlauf die Suspension auf eine Temperatur erhitzt wird, die der 1-Stunden-Halbwertzeit-Temperatur des oder der zusätzlichen organischen Peroxids/Peroxide entspricht.

## Claims

1. Process for the preparation of expandable polystyrene comprising the following steps :
- I°)a) preparing an aqueous suspension comprising styrene monomer
- I°)b) heating the suspension at a polymerisation temperature ranging from 100°C to 120°C,
- I°)c) adding continuously, before, during and/or after step I°)b) at least one organic peroxide initiator of formula (I) 1-alkoxy-1-t-alkylperoxycyclohexane in which the alkoxy group contains 1 to 4 carbon atoms, the t-alkyl group contains 4 to 12 carbon atoms, and the cyclohexane ring may optionally be substituted with 1 to 3 alkyl groups, each independently having 1 to 3 carbon atoms,
- ii°) adding a blowing agent selected from the group consisting of alkanes having from 4 to 6 carbon atoms and mixtures thereof.

2. Process according to claim 1, wherein the at least one organic peroxide initiator is 1-methoxy-1-t-amylperoxycyclohexane (TAPMC).

3. Process according to claim 1 or 2, wherein said blowing agent is selected from the group consisting of butane, 2-methylbutane, pentane, cyclohexane and mixtures thereof.

4. Process according to any of claims 1 to 3, wherein preferably at most 40% by weight (%w/w), more preferably at most 30 to 20% by weight, and most preferably at most 5% by weight of the organic peroxide, based on the total weight of the peroxide used during the polymerization, is present before step I°)b), while the remainder is added continuously over a period of at least 1, preferably 2, and more preferably 2-4 hours during or after step I°)b).

5. Process according to any of claims 1 to 4, wherein the temperature of step i°) ranges from 105°C to 115°C, preferably is 110°C.

6. Process according to any of claims 1 to 5, wherein the aqueous suspension of step i°) further comprises at least one additional organic peroxide initiator, different from said organic peroxide initiator of formula (I).

7. Process according to claim 6, wherein said additional peroxide initiator is selected from the group consisting of compounds having the formula (II), ie 00-t-alkyl-O-alkyl monoperoxycarbonate, wherein t-alkyl contains from 4 to 12 carbon atoms, preferably from 4 to 5 carbon atoms, and alkyl contains from 3 to 12 carbon atoms, and preferably 8 carbon atoms, and their mixtures.

8. Process according to any of claims 1 to 7, wherein said organic peroxide initiator of formula (I) is used in the aqueous suspension of step i°) in amounts from 4 to 25 milli equivalents of initiator per liter of styrene, more preferably from 12 to 20 milli equivalents of initiator per liter of styrene.

9. Process according to any of claims 1 to 8, wherein the styrene monomer to be polymerized also contains up to 15 weight %, with respect to the total weight of styrene, of copolymerizable monomers other than styrene monomers.

10. Process according to any of claims 1 to 19, wherein hexabromocyclododecane is added to the aqueous suspension at step i°) or at step ii°).

11. Process according to any of claims 6 to 10, wherein the aqueous suspension of step i°) comprises an organic peroxide initiator of formula (I) as first stage initiator and at least one additional other organic peroxide initiator as second stage initiator, step i°) comprises a stage I°)b'), during which said suspension is heated at a temperature ranging from 100°C to 120°C, preferably from 105°C to 115°C, and more preferably to 110°C, and a second stage I°)c') during which said suspension is heated at a temperature corresponding to the one hour half life temperature of the at least additional other organic peroxide.
